(19) Europäisches Patentamt
European Patent Office
Office européen des brevets

(11) **EP 2 739 104 A1**

(12) **EUROPEAN PATENT APPLICATION**

(43) Date of publication:
**04.06.2014 Bulletin 2014/23**

(51) Int Cl.:
*H04W 72/04* [(2009.01)]

(21) Application number: **12290415.4**

(22) Date of filing: **28.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Razavi, Rouzbeh**
**Blandchardstown, Dublin 15 (IE)**

• **Lopez-Perez, David**
**Blandchardstown, Dublin 15 (IE)**

(74) Representative: **Sarup, David Alexander**
**Alcatel-Lucent Telecom Ltd**
**Intellectual Property Business Group**
**Christchurch Way**
**Greenwich**
**London SE10 0AG (GB)**

Remarks:
Amended claims in accordance with Rule 137(2) EPC.

(54) **A cellular telecommunications base station and a method of allocating a spreading code**

(57) A method is provided of allocating a spreading code for communications between a user terminal and a first cellular telecommunications base station. The method comprises the following. A group is defined of neighbouring base stations within which communications are synchronised and the same scrambling code is used, the group including the first base station, each base station in the group being assigned a respective set of spreading codes in which the spreading codes are different from the spreading codes assigned to other base stations in the group. A determination is made whether all the spreading codes in the set assigned to the first base station are currently allocated for use in communications between the first base station and other user terminals. Upon determining that all the spreading codes in the set assigned to the first base are currently allocated for use, another base station in the group is selected and a determination made whether all of the spreading codes in the set assigned to the second base station are currently allocated for use.

FIG. 7

REUSE ORDER IS 0

**Description**

**Field of the Invention**

The present invention relates to telecommunications, in particular to cellular telecommunications.

**Description of the Related Art**

Small cells, by virtue of their reduced radio coverage range as compared to macrocells, are likely to significantly change the radio access aspect of cellular networks. As their coverage range is small, the radio spectrum can be used much more efficiently than by using just macrocells. Also small cell base stations may be deployed easily as consumer equipment in an ad-hoc manner rather than their positioning being centrally planned. Furthermore, owing to the enhanced links due to the close proximity between transmitters and receivers, of user terminals and small cell base stations, improved services and faster data rates can be realised.

For these benefits to be well realised in practice, many factors need to be considered, particularly as small cells deployment tends to be ad-hoc and organic. Bearing in mind that a large increase in data traffic is predicted, for example, in one study, from 10 Megabytes per day in 2010 to 300 Megabytes per day in 2020, there are likely to be many dense deployments of small cells. Two technical concerns are how to keep intercell interference and handover failures within acceptable limits.

Increased intercell interference in consequence of dense deployments of small cells may cause significant losses in performance reducing a network operator's ability to offload traffic from macrocells to small cells. The rate of handover success is also significant. In small cells at present, soft handover is not supported (due to the increased complexity that would result at small cell gateways), and hard handovers are typically fairly unreliable with high handover failure rates.

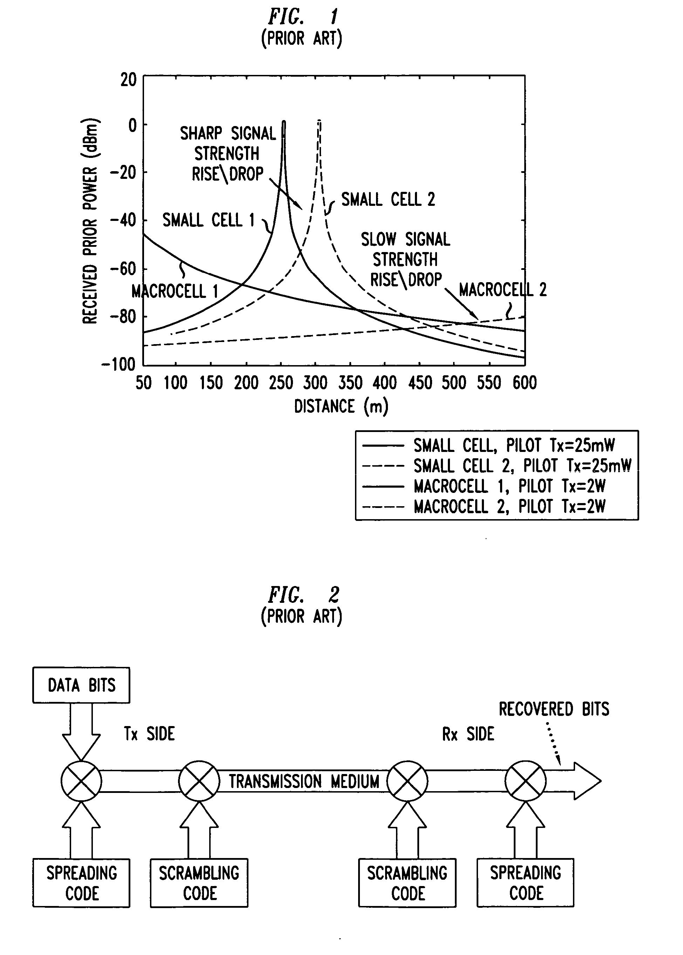

Small cells have a higher failure rate for hard handovers than do macrocells. As shown in Figure 1 (PRIOR ART), this is because the strength of the small cell's signal changes sharply as a user terminal approaches the edge of the small cell's coverage area. On the other hand, the strength of a macrocell's signal changes more gradually. This is shown in Figure 1, where pilot signal strength as a function of distance is shown for two neighbouring small cells and two neighbouring macrocells. The higher handover failure rate occurs because the sharp change in signal strength of small cells means that the Signal-to-Interference-ratio (SINR) of the user's control channel may quickly fall below a detection threshold whilst the handover procedure is still being executed, resulting in a call drop.

Interference is typically mitigated by adjusting the power and coverage area of small cell base stations. However this has limited impact and intercell interference can remain a problem particularly for user terminals near the edges of the small cell's coverage area.

A high handover failure rate is typically addressed by adjusting handover parameters, although this is problematic. For example, setting short time-to-trigger (TTT) values may decrease handover failures to some extent but results in ping-pong effects and increased signalling for handover. Also, these techniques are often ineffective when the user's speed of movement is high.

Small cells may be of Wideband Code Division Multiple Access (WCDMA) type.

Figure 2 (PRIOR ART) is a simple block diagram illustrating transmission and reception processes, involving spreading and scrambling codes, as used in WCDMA. WCDMA applies a two-layered code structure to signals, the code structure consisting of basically orthogonal spreading codes and pseudo-random scrambling. Spreading is performed using channelization codes to perform each data symbol into a number of chips thus increasing the bandwidth of the signal. Spreading codes are selected for good orthogonality from a structured code tree. Specifically, codes are assigned based on the Orthogonal Variable Spreading Factor (OVFS) technique in which a code is given a cross-correlation property, such that the inner product of the code with codes of other users is small, and an autocorrelation property, such that the inner product of the code and a shifted version of itself, is also small. If an ideal state of complete orthogonality were ever achieved, and that is an ideal state because, in practice, orthogonality is affected by multipath propagation, then there would be no interference between codes.

As shown in Figure 2, scrambling codes are applied after spreading codes and do not change the bandwidth of a user's signal. With different scrambling codes used by two cells that neighbour each other, interference from one cell is effectively spread uniformly across the entire spreading code tree of the other cell regardless of the other cell's spreading code allocations. Conversely, when the scrambling codes are identical, in other words no scrambling is applied, the interference is zero when there is full orthogonality between spreading codes. However, when identical scrambling codes are applied, if the same spreading code is allocated in both cells, interference will be more significant than otherwise.

## Summary

The reader is now referred to the appended independent claims. Some preferred features are laid out in the dependent claims.

An example of the present invention is a method of allocating a spreading code for communications between a user terminal and a first cellular telecommunications base station. The method comprises the following. A group is defined of neighbouring base stations within which communications are synchronised and the same scrambling code is used, the group including the first base station, each base station in the group being assigned a respective set of spreading codes in which the spreading codes are different from the spreading codes assigned to other base stations in the group. A determination is made whether all the spreading codes in the set assigned to the first base station are currently allocated for use in communications between the first base station and other user terminals. Upon determining that all the spreading codes in the set assigned to the first base are currently allocated for use, another base station in the group is selected and a determination made whether all of the spreading codes in the set assigned to the second base station are currently allocated for use.

Preferred embodiments mitigate interference between small cell base stations and address problems associated with inter-small cell handovers. Some preferred embodiments involve clustering a group of small cells, synchronising between cells in the cluster, applying identical scrambling codes for data and control channels for all cells within the cluster, and allocating spreading codes intelligently according to a scheme. This is so as to provide improved spatial reuse of the spreading codes for user terminals in the cluster.

Preferred embodiments provide a spreading code allocation strategy in small cell networks.

Preferred embodiments provide an efficient way to address both inter-cell interference between small cells and inter small cell handovers, for example in Wideband Code Division Multiple Access (WCDMA) networks.

Preferred embodiments enable successful hard handovers without the need for complex soft handovers, and provide improved Signal to Interference Noise Ratios (SINRs) and hence improved data throughput for small cell users. Preferred embodiments increase spatial reuse of spreading codes via an intelligent code allocation scheme implemented in a distributed fashion amongst the base stations with low signalling overheads. Preferred embodiments involve dense deployment of small cell base stations.

In some preferred embodiments, upon a code allocation being made, the allocation is recorded in a record of which codes are allocated in which base stations in the group.

The present invention also relates to a corresponding network node. One example provides a cellular telecommunications network node comprising a spreading code allocator for allocating spreading codes for communications between a user terminal and the base station, the allocator comprising:

means to define a group of neighbouring base stations within which communications are synchronised and the same scrambling code is used, the group including the first base station, each base station in the group being assigned a respective set of spreading codes in which the spreading codes are different from the spreading codes assigned to other base stations in the group;

means to determine whether all the spreading codes in the set assigned to the first base station are currently allocated for use in communications between the first base station and other user terminals; and

means configured to, upon determining that all the spreading codes in the set assigned to the first base are currently allocated for use, select another base station in the group and determine whether all of the spreading codes in the set assigned to the second base station are currently allocated for use.

The node may be a small cell base station or may be a controller/gateway for small cell base stations.

## Brief Description of the Drawings

An embodiment of the present invention will now be described by way of example and with reference to the drawings, in which:

Figure 1 is a diagram illustrating pilot power variations as a function of distance in femtocells and macrocells (PRIOR ART)

Figure 2 is a diagram illustrating the known transmission and reception process using spreading and scrambling codes (PRIOR ART),

Figure 3 is a diagram illustrating a telecommunications network according to a first embodiment of the present invention,

Figure 4 is an example of assigning sets of spreading codes to cell, also known as spreading code partitioning between cells, in the network shown in Figure 3,

Figure 5 is an example of spreading code allocation when no code is unused in the cell's assigned set in the network shown in Figure 3,

Figure 6 is an example of a scenario in the network shown in Figure 3 where one cell seeks to 'borrow' a spreading code from another cell,

Figure 7 is a flow chart illustrating allocation of spreading codes in the network shown in Figure 3 when reuse order is zero,

Figure 8 is a flow chart illustrating allocation of spreading codes in the network shown in Figure 3 when reuse order, as will be explained below, is one,

Figure 9 is an example illustrating spreading code allocation when the reuse order is one,

Figure 10 is a flow chart illustrating allocation of spreading codes in the network shown in Figure 3 when reuse order is two or more, and

Figure 11 is an example illustrating spreading code allocation when the reuse order is two.

**Detailed Description**

Sometimes in this description, as is commonplace in the art, we use the term small cell or cell when referring to a small cell base station. The meaning is intended to be clear in context. A small cell base station provides, of course, what is often referred to a small cell coverage area.

The inventors realised that in practice in the known approach in which a small cell scrambles data and control signals using a scrambling code different to that of is neighbouring cells, interference is effectively spread uniformly across the spreading code tree of the other cell regardless of the other cell's spreading code allocations.

The inventors also realised that handover is a challenging issue in the case of small cells as soft handover is not available and hard handovers are less reliable than for macrocells due to the sharper power over distance changes (as shown in Figure1). Furthermore, for small cell networks, as compared to macrocell networks, due to the relatively short distances between user terminals and the base stations to which the user terminals are connected, the spread in delays of signals is lower and hence the orthogonality factor is lower implying an increased benefit in spatial reuse of spreading codes between users within a cluster of neighbouring cells.

Example Network

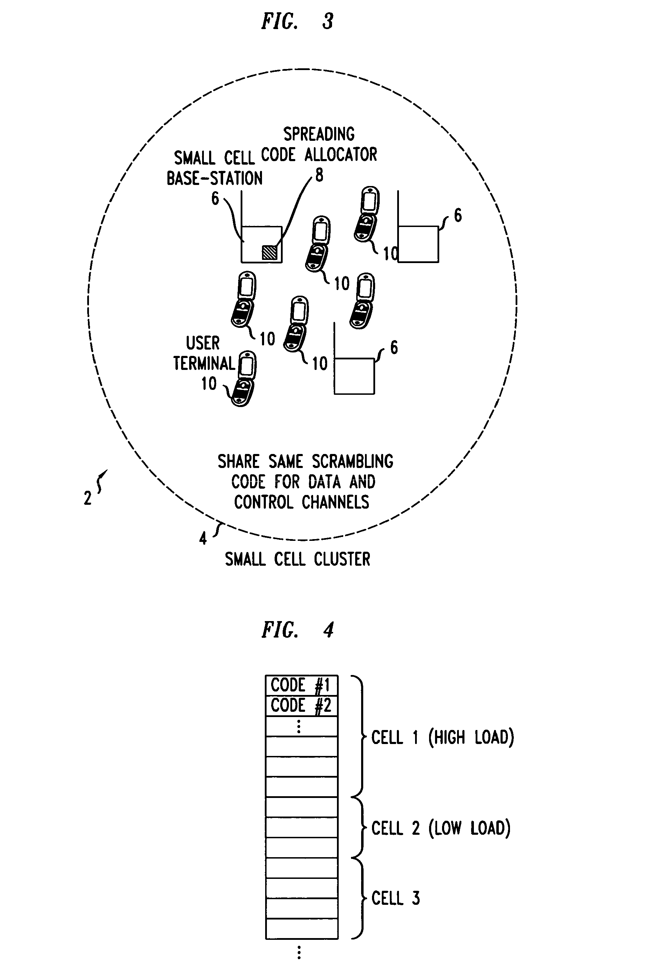

As shown in Figure 3, a wireless cellular telecommunications network 2 includes a cluster 4 of small cell base stations 6. The cluster 4 is a group of neighbouring small cell base stations 6. The number of small cell base stations 6 in the cluster may be large, but in Figure 3 only three are shown for simplicity. Each small cell base station 6 includes a spreading code allocator 8 (one of which is shown in Figure 3 for simplicity). Each small cell base station provides a respective small cell radio coverage area (not shown). The small cell base stations 6 in the cluster 4 use the same scrambling code for both data and control channels.

Operation

Spreading codes are used in communications between the small cell base stations 6 and user terminals 10 and these should be substantially orthogonal to a practical extent if possible. To provide such a situation it may be considered that the following steps are undertaken:

(a) Clustering: a cluster of small cell base stations is defined.
(b) Synchronising communications within the cluster. If not already synchronised, the small cell base stations 6 in the cluster are adjusted in their timings so that their communications are synchronised.
(c) Applying identical Scrambling codes: identical scrambling codes are applied for both data and control channels in all cells of the cluster.
(d) Cooperative Spreading code Allocation: Spreading codes are allocated using an automated intelligent approach which will be explained in detail below and allows effective spatial reuse of available radio bandwidth amongst multiple users in the cluster.

We now consider these in turn.

Clustering

As regards the clustering, a cluster of small cell base stations is defined. Complexity and signalling overheads associated with cooperative code allocation schemes increase as the number of base stations involved increases. In consequence considering the small cells as grouped into reasonably sized clusters allows a cooperative spreading code allocation scheme to be usefully applied within the cluster. Methods of defining clusters of small cells are well known in the art. In this example a known approach to clustering is taken as described in the paper entitled "FCRA: Femtocell Cluster-Based Resource Allocation Scheme for OFDMA Networks" by Abbas Antoun Hatoum, Nadijb Aitsaadi, Rami Lanar, Raouf Boutaba, and Guy Pujolle, IEEE ICC 2011. In other embodiments, other methods of providing a cluster of neighbouring femtocell base stations may be used.

Synchronising

If not already synchronised, the small cell base stations 6 in the cluster are adjusted in their timings so that their communications are synchronised.

In this example which is a Wideband- Code Division Multiple Access (WCDMA) system according to Third Generation Partnership Project (3GPP) technology, synchronisation is simply achieved using the known X2 interfaces that allow small cell base stations to communicate via the backhaul. In this example, this is realised using synchronisation methods according to the IEEE 1588 time synchronisation standard. In some alternative examples, synchronisation is realised using other methods such as Network Time Protocol (NTP).

Applying identical Scrambling codes

Identical scrambling codes are applied for both data and control channels in all cells of the cluster. This is because it was realised that unless they were identical, the choice of spreading code will have no impact on interference.

Cooperative Spreading code Allocation

The inventors realised that following an assignment of codes to base stations, to minimise inter-cell interference and to overcome the handover problems in small cells, spreading codes should be allocated intelligently to calls or data sessions with the base stations to enable good spatial reuse of spreading codes but without excessive signalling overheads. This is explained in detail below.

Initial Assignment of Codes to Cells

To this end, as shown in Figure 4, in an initial assignment, the available codes are divided among the cells so that each cell has some codes assigned. This can be considered as privatising a set of the codes (sometimes referred to as a "partition" of the codes) in the code spreading tree, for each cell in the cluster. This is done by estimating, based on long term observations and statistics, the load on each cell in terms of the number of user terminals that a cell is serving or the level of traffic demand in kilobits per second. The number of codes assigned to each cell is then selected in proportion to the cell's estimated load, which has the effect of avoiding excessive signalling. For example, as shown in the Figure 4 example, Cell#1 is found to be of high load so six codes are assigned, cell#2 is of low loading so is assigned three codes, etc.

Allocation of spreading codes to users

Upon arrival of a new user in a small cell, the small cell base station checks to see if there is an unallocated code available in its own assigned code set. If yes, the base station allocates the code to communications with that user and changes, in its record, the code status to 'allocated'. Moreover, the associated pathloss between the user terminal and the base station is recorded associated with that allocated spreading code. These records are stored in the base stations by their respective spreading code allocator stages and are updated periodically (but not too frequently) to account for users' mobility and wireless channel variations.

If the cell does not have an unallocated cell available in its own set of assigned codes, the cell tries to borrow an unallocated code from another cell in the cluster. In this example the first cell selects another cell in the cluster according to a predetermined order and communicates with that cell via the X2 interface to check if any of that second cell's assigned codes are unallocated. (In other embodiments, the another cell is selected at random.) If yes, in the first cell, one of those unallocated codes is allocated to the user and the record is updated to show the code is allocated. It can be considered that the code is temporarily transferred (speaking logically as opposed to physically), in other words 'borrowed', by the cell that wants to use the code.

The records are updated to show both the borrowing cell and the pathloss measured between the user terminal and the borrowing cell (the cell serving the user terminal).

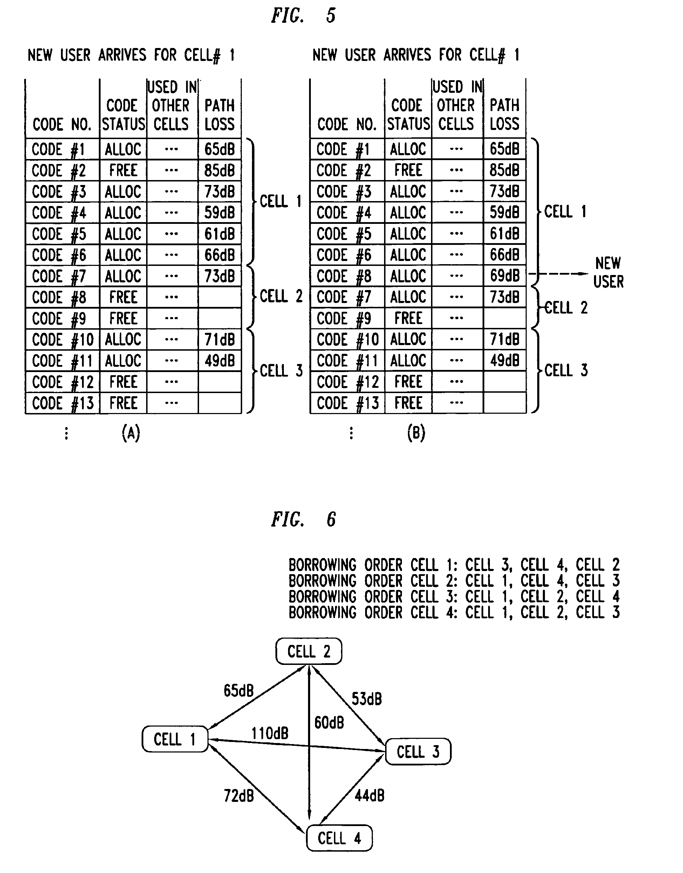

An example of the above process is shown in Figure 5. As shown in the record A, see Fig.5 left hand side, upon arrival of a new user in cell#1, all codes assigned to that cell have been allocated. Accordingly base station cell #1 communicates with base station cell#2 in search of an unallocated code amongst the codes assigned to cell#2. As shown in B (Fig,5 right hand side) which is the record at a later time, an unallocated code, which is Code#8 in this example, is allocated by cell#1 and remains under the control of cell#1 until being released.

After use the code is released, the lending cell base station is notified and the code is transferred back to being available for that cell (which has logical ownership).

Naturally, if for a first cell there is no unallocated code available among the assigned codes of the other cell, then a further cell is contacted, and so on, seeking out an unallocated code. Either an unallocated code is found or it is determined that all codes are currently allocated.

If all codes are allocated then a process is started of allocating a code to more than one user terminal, as will be explained further below. Before that, we next explain some aspects useful for understanding.

Borrowing Order

To have best benefit from spatial reuse of spreading codes and reduced interference, one cell should 'borrow' a code from a cell furthest away within the cluster. Therefore each cell in the cluster has a particular borrowing order, namely an order in which it will ask other cells for a code to use. To construct a borrowing order a cell estimates its path loss to the other cells in the cluster. In this example, this is done by measuring received power of pilot signal from the other cells. The borrowing order for the cell is then derived by sorting into an order of decreasing path loss to the cell.

For purpose of illustration, an example is shown in Figure 6, of a simplified case where there are four cells in the cluster. From the pathloss measurement values shown in Figure 6, the borrowing order for each cell is determined as also shown in Figure 6.

Reuse order

A reuse order of a cluster is the minimum number of users that any of the spreading codes, in the whole set of codes assigned to a cluster, is currently allocated to. For example in the case shown in Figure 5, the reuse order is 0 since there are some codes that are unallocated. Consider a scenario, in which all the codes are allocated to one user and some to two users in the cluster, then the reuse order is 1. And so on. As a general rule, we can say that where the current reuse order is N (where N=0,1,2,3...) no code may be allocated to more than N+1 users (unless reuse of the same code in the same cell would otherwise result). For example, if there are unallocated codes available (reuse order N=0), no code should be allocated to two users.

When searching for a code, each cell determines the current reuse order of the cluster from an initial scan of its record as to what codes are in use.

Reuse Order 0

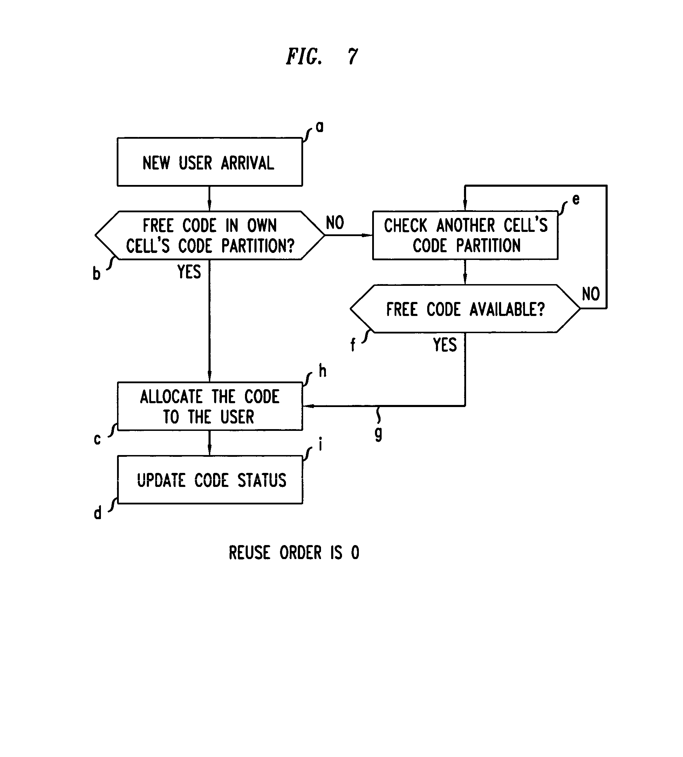

This has been explained above with a specific example provided in Figure 5. However, it is useful to now illustrate this process in a flow chart by reference to Figure 7.

As shown in Figure 7, upon arrival (step a) of a new user in a small cell, the small cell base station checks (step b) to see if there is an unallocated code available in its own assigned code set. If yes, the base station allocates (step c) the code to communications with that user and changes (step d), in its record, the code status to 'allocated'.

If the cell does not have an unallocated cell available in its own set of assigned codes, the cell tries to borrow an unallocated code from another cell in the cluster. In this example the first cell selects another cell in the cluster according to a predetermined borrowing order and communicates with that cell via the X2 interface to check (steps e,f) if any of that second cell's assigned codes are unallocated. If yes (step g), in the first cell, one of those unallocated codes is allocated (step h) to the user and the record is updated (step i) to show the code is allocated.

Reuse Order 1

In the situation mentioned above that none of the cells is found to have an unallocated code, then cell seeking a code communicates with the cell that is first on its borrowing list.

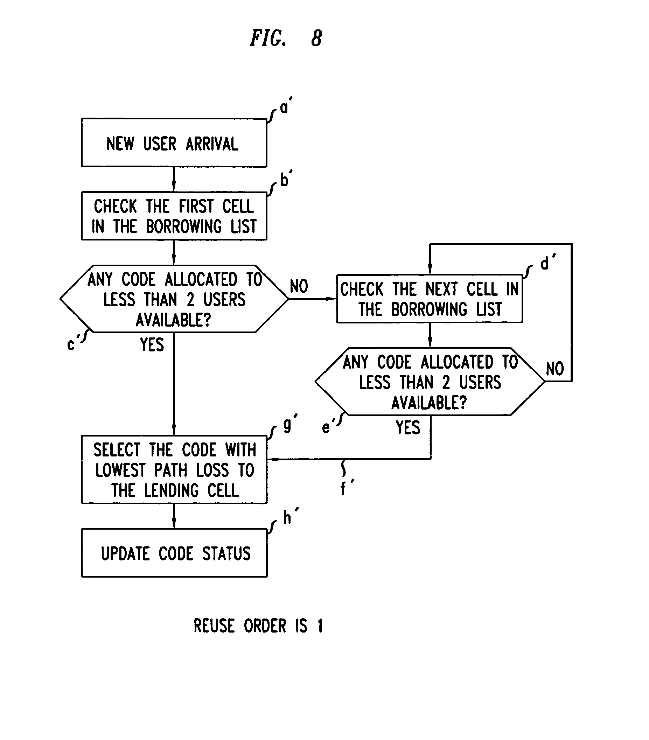

Let's assume, as is likely, that the reuse order is 1. In this situation the process shown in Figure 8 occurs.

As shown in Figure 8, upon arrival (step a') of a new user terminal in the cell, the cell seeking to borrow selects (step b') a prospective lending cell according to its borrowing list and checks (step c') whether there is any code allocated to only one user among in the set of codes assigned to the prospective lending cell. If No, the cell seeking to borrow selects (step d') the next prospective lending cell according to its borrowing list and checks (step e') whether there is any code allocated to only one user among in the set of codes assigned to that prospective lending cell. This process continues until such a code is found (step f'). To enhance spatial reuse of spreading codes and mitigate the impact of consequential interference, if more than one code is eligible to be borrowed, the cell seeking to borrow chooses (step g') the one having the lowest path loss to the lending cell (to be borrowed from). Additionally, once a code is reused, the cell identifier(s) of the other cell(s) that is/are simultaneously using that code are recorded (step h') in the lending cell and that information is also recorded in the record in the borrowing cell. In the situation that a code is used in more than one cell, the path loss field in each cell's record refers to the path loss of the user terminal in that cell, hence it is updated locally without reference to other cells.

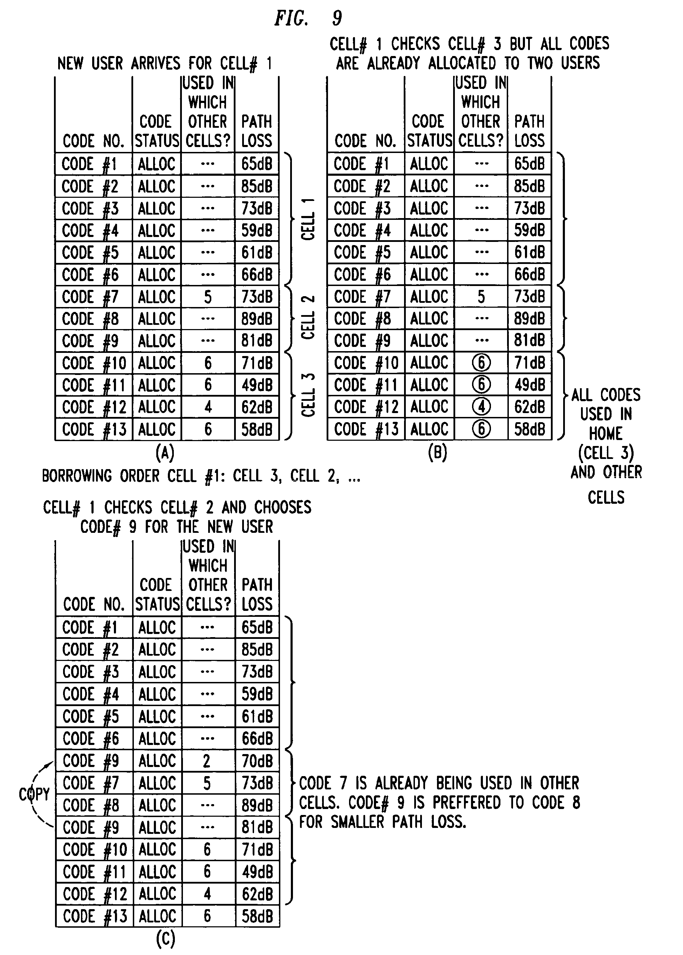

An example of this process is shown in Figure 9.

As shown in Figure 9, a new user terminal arrives in cell#1 but there is no unallocated code available. The top two cells on the borrowing list of cell#1 are cell#3 then cell#2 in this example. However, as can be seen particularly in Figure 9 (b), all of the codes of cell#3 are already allocated to two users. In consequence, cell#1 communicates with cell#2 where a number of codes that are allocated to a single user are available. As shown particularly in Figure 9(c), cell#1 selects the code (Code#9) of cell#2 with lowest path loss to its serving cell(cell#2). Subsequently the field in the record that indicates the cells at which the code is used is updated. Also, since the code is now being used both in cell#1 and cell#2, a logical copy of the code status is created in the record in cell#1.

Reuse Order 2 and above

Now let's consider the relatively infrequent situation that the reuse order of the cluster is 2 or more, in other words each spreading code is allocated to at least two user terminals. In this situation a borrowing cell communicating with a lending cell takes into account the use of that code in other cells in the cluster.

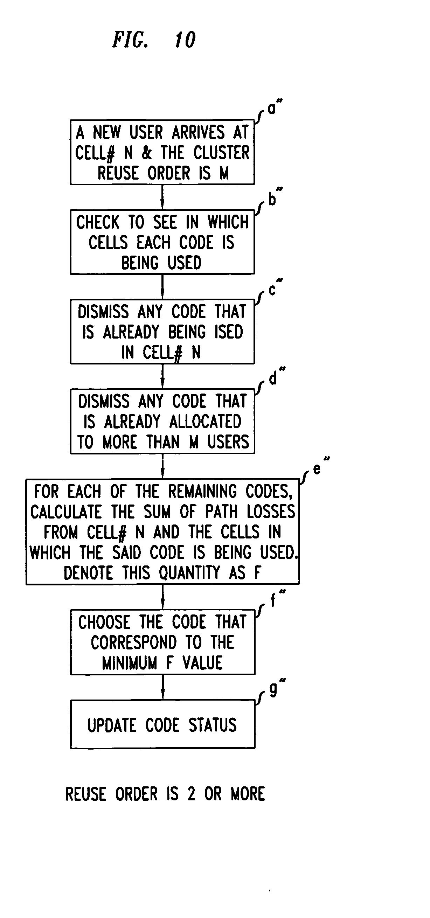

The approach taken is shown in Figure 10.

As shown in Figure 10, a new user terminal arrives (step a") at cell#N in the cluster but the reuse order M of the cluster is two or more. The cell #N checks (step b") to see in which cells each spreading code is being used and dismisses (step c") from consideration those already being used in its own cell#N. The cell#N then dismisses (step d") any code allocated to more than M users. For each of the remaining codes, a value of a function F is calculated (step e"), that function being the sum of path losses between the cell#N and the cells in which the respective code is being used in the cluster. The code that has the lowest F value is selected (step f") for use by that new user terminal, and the cell's record is updated(step g").

Now let's explain this approach in more detail by way of example.

For example, consider the scenario shown in respective of Figure 6 described above, and assume that the reuse order is two. Cell#3 needs a spreading code for a newly arriving user terminal. Cell#3 communicates with cell#1 since that is the first cell on its borrowing list. Some of the cells used in cell#1 are also being used in cell#4 which is located near cell#3 in this example, so any of those codes are best avoided to avoid significant mutual interference between cell#3 and cell#4. As mentioned above, more broadly when selecting a code to use that is currently already in use by more than one cell, the borrowing cell takes into account all other cells in which that code is currently being used.

In simple terms, the borrowing cell calculates the sum of the path losses (in linear form) from the cells in which that code is used and uses this value in selecting which code to allocate. In mathematical terms, assuming the reuse order of the cluster to be N (>1) and the total number of codes to be K , where $P_{i,j}$ denotes the linear path loss between cell i and j, and Vc represents the set of cells where $c^{th}$ code (c<K) is currently being used (for example $V_1=\{1,2,7\}$ indicates that code#1 is being used in cells 1,2 and 7), then the code selected for the $m^{th}$ cell when the $m^{th}$ cell needs a new code allocation, $C_{New,m}$ is

$$\forall i = \{1,2,..K\},\ F(i) \equiv \begin{cases} \inf & if\ m \in V_i\ or\ |V_i| > N \\ \sum_{j \in V_i} P_{m,j} & Otherwise \end{cases}$$

$$C_{New,m} = \arg\min_i (F(i))$$

Let us now illustrate this using a simple example as follows.

Example where reuse order is 2

Consider the example shown in Figure 6. The linear inter-cell path loss matrix is shown in Table 1:

Table 1

|  | Cell 1 | Cell 2 | Cell 3 | Cell 4 |
|---|---|---|---|---|
| Cell 1 | NA | 3.162e-07 | 1e-11 | 6.309e-08 |
| Cell 2 | 3.162e-07 | NA | 5.011e-06 | 1.00e-06 |
| Cell 3 | 1.00e-11 | 5.011e-06 | NA | 3.981e-05 |
| Cell 4 | 6.309e-08 | 1.00e-06 | 3.981e-05 | NA |

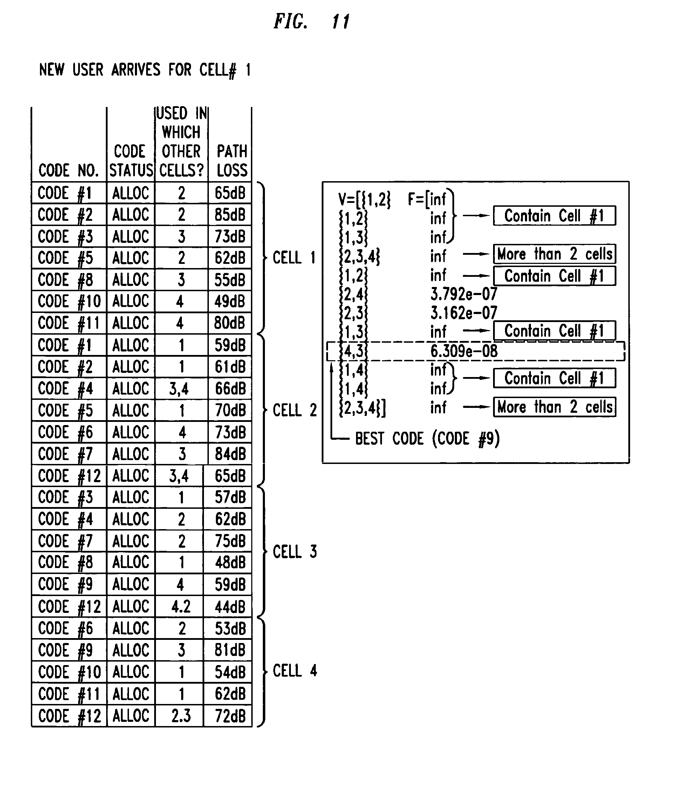

Referring to Figure 11, consider the code tree status where the code reuse order of the cluster is 2. In this example, a new user terminal arrives at cell #1 and the cell needs to find a code to allocate to the user. The V vector, shown in the right hand side of Figure 11, is used to indicate in which cells each code is already being used. For example, the first entry in the V vector is {1,2} this means that code #1 is used in cells 1 and 2. Similarly the last (12th) entry in the V vector is {2,3,4} this means that 12th code is already used in cells 2,3 and 4.

Now to find a code to allocate, all the codes that are already being used in cell#1 are dismissed as candidates , because allocating the same code to two users of the same cell would make acceptable functioning impossible. As shown in Figure 11, the V vector, shows that the following codes are used in Cell #1: Code#1, Code#2, Code#3, Code#5, Code#8, Code#10, Code#11.

Additionally, any code that is already allocated to 3 users are dismissed as candidates, on the principle that we should not allocate a code to more than 3 users when the cluster reuse order is 2. This means that Code#4 and Code#12 are not to be considered as they are already allocated to 3 users.

Now to choose from the remaining codes (that are Code#6, Code#7 and Code#9) the sum of the path losses (in linear form and not decibel form) is calculated from Cell#1 to each of the cells in which those codes are used. Let us consider Code#6. Code#6 is being used cell 2 and cell 4. From Table 1 above, it can be seen that the path loss between Cell#1 and Cell#2 is 3.162e-07. Additionally, the pathloss between Cell#1 and Cell#4 is 6.309e-08. Therefore, sum of the path loss values is 3.162e-07+6.309e-08 = 3.792e-07 .

As for code#7, it can be seen that it is used in Cell#2 and Cell#3 (see the V vector or the code allocation status table in Figure 11). From Table 1, it can be seen that the path loss between cell#1 and cell#2 is 3.162e-07 and the pathloss between cell 1 and cell 3 is 1.00e-11. Therefore the sum of the path losses is 3.162e-07+1.00e-11=3.162e-07.

Finally for code#9, as shown in Figure 11 left hand side, and the corresponding V vector shown in Figure 11 right hand side, this code#9 is already being used in both Cell#3 and Cell#4. The pathless between Cell#1 and Cell#3 is 1.00e-11 and the path loss between Cell#1 and Cell#4 is 6.309e-08, so the sum is 6.309e-08+1.00e-11=6.309e-08.

Therefore the best code to allocate is code#9 since it results in the minimum sum of the path losses. This makes sense as code#9 is the one already used in cell#3 and cell#4 and those two cells are the ones furthest from cell#1.

To present this process more formally, as mentioned before, we use F to denote the sum of the path losses between the cell requesting the code (cell#1 in this example) and other cells in which a given code is being used, and the best code to allocate is the one that corresponds to minimum value of F. If the code is already used in the requesting cell or is allocated more than M times (where M is the reuse order of the cluster), F is set to infinity to avoid selecting those codes. This is shown in Figure 11 right hand side.

Orthogonality Factor

The approach described with reference to Figures 3 to 11 seeks to minimise the inter-cell interference and overcome handover problems in small cells by allocating orthogonal codes to user terminals. However, due to multipath effects the codes are not fully orthogonal in practice. Orthogonality Factor (0<OF<1) indicates to what extent the codes are orthogonal to each other (OF=0 represents full orthogonality). The Orthogonality Factor is closely related to the delay spread of the signal. However, as their name implies, small cells have a lower coverage radius resulting in short distances between user terminals and the small cell base-stations and hence low OF values.

Some further embodiments

It should be noted that the above examples are relatively simple and in some embodiments in practice the number of spreading codes used is much greater than shown in the above examples. In such scenarios, the reuse order may rarely exceed 1.

Some further embodiments are described below:

a) Support for orthogonal variable-spreading-factor (OVSF)

In some embodiments that are WCDMA systems, higher data rates can be supported either by assigning multiple codes to a user or by the use of OVSF code allocation schemes in which a shorter code (lower spreading factor) is assigned to a user. Compared to using multiple codes, OVSF provides flexible and simple performance but at the cost of an increased probability of code blocking (i.e. as a result of code wasting). However, code reallocations can mitigate the code blocking to a great extent.

Some embodiments (not shown) additionally support variable length codes. This is achieved by considering shorter codes (having a lower spreading factor) as the combination of individual longer codes. For example, if a user terminal requires bandwidth that can be achieved by allocating a spreading factor of 16, a block of 4 codes with spreading factor of 64 is allocated to the user. Fortunately, the effect of mutual interference is less significant as a code is partially re-used (as compared to a full re-use scenario).

b) Real Time Codes' Re-allocation

In some embodiments, to maximise the spatial re-use gain and to minimise the effect of mutual interference, codes are reallocated in a real time fashion. Consider a scenario in which a code is borrowed from another cell, ideally the borrowing cell allocates this code to a user terminal that is closest to the borrowing cell, so the effect of interference from another cell that is using the same code will be less significant (for example, an SINR drop from 15dB to 12dB does not impact the throughput as significantly as drop from 6dB to 3dB would). In this example, some re-allocation is undertaken of the codes that have already been allocated. For example, a user terminal that becomes closest to the cell may be switched from using another code.

c) Centralised Approach

The scheme presented above with reference to Figures 3 to 11 is a distributed approach that benefits from infrequent direct communication between cells of the cluster. Alternatively, a similar approach may be undertaken in a centralised fashion, in which a centralised entity collects the codes' status from all participating cells and allocates the codes to new users of the cluster upon their arrival. In some embodiments the centralised entity may be one of the cells of the cluster.

Comparing distributed and centralised approaches, the communication overhead is less significant in most practical scenarios in the distributed approach. For example, in case of a distributed scheme, none of the cells needs to communicate with other cells when allocating codes from its own private code partition (assigned code set). Furthermore, updating local user terminals' path loss does not require communication. However, in the distributed approach, the signalling overhead may increase if the reuse order of the cluster is very high requiring each cell to communicate to multiple cells upon arrival of a new user terminal. However, generally speaking the signalling overhead of is small, in both distributed and centralised approaches as it only occurs when a new user terminal arrives and when the call/data session is terminated. (This might be at most a few hundred communications per day).

d) Other types of cells/other networks

Although small cells are often deployed in an ad-hoc fashion particularly in network 'hotspots' where user terminal density is high, due to their small coverage areas, small cells have a lower fractional loading than macrocells. Also because users are normally closer to their serving small cell base station than to a macrocell, the delay spread is smaller and the orthogonality factor is lower for small cells. Accordingly the proposed scheme is attractive for small cell deployments, but may also be used in deployments of other cells, such as macrocell networks.

e) Time Division Access

HSPA is the extension of the WCDMA technology that considers both code and time domains in scheduling users. In this context, in a further embodiment, the schedulers of small cell base-stations belonging to the same cluster cooperate in order to allocate codes to the users so as to minimise code collisions (in other words seekto avoid scheduling users with the same code in the same time window). This mayfurther improve the overall performance.

General

The present invention may be embodied in other specific forms without departing from its essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

A person skilled in the art would readily recognize that steps of various above-described methods can be performed by programmed computers. Some embodiments relate to program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. Some embodiments involve computers programmed to perform said steps of the above-described methods.

**Claims**

1. A method of allocating a spreading code for communications between a user terminal and a first cellular telecommunications base station, the method comprising:

   defining a group of neighbouring base stations within which communications are synchronised and the same scrambling code is used, the group including the first base station, each base station in the group being assigned a respective set of spreading codes in which the spreading codes are different from the spreading codes assigned to other base stations in the group;
   determining whether all the spreading codes in the set assigned to the first base station are currently allocated for use in communications between the first base station and other user terminals; and
   upon determining that all the spreading codes in the set assigned to the first base are currently allocated for use, selecting another base station in the group and determining whether all of the spreading codes in the set assigned to the second base station are currently allocated for use.

2. A method according to claim 1, in which upon determining that not all the spreading codes in the set assigned to said another base station are currently allocated for use, allocating for use in communications between the first base station and the user terminal one of the codes assigned to said another base station that is not currently allocated for use.

3. A method according to clam 1, in which the base station having the highest measured signal attenuation to the first base station in the group is selected first as said another base station.

4. A method according to claim 1 or claim 2, in which upon determining that all of the spreading codes in the set assigned to said another base station are currently allocated for use, a further base station in the group is selected and a determination made whether all of the spreading codes in a set assigned to the further base station are currently allocated for use.

5. A method according to any preceding claim, in which the first base station selects further base stations in the group in turn for consideration according to their order in a list of decreasing measured attenuation to the first base station.

6. A method according to any preceding claim, in which upon the first base station determining that none of the other base stations in the group has an unallocated code, one of said other base stations is selected and a determination made whether any of the spreading codes assigned to said one of said other base stations is allocated to less than two user terminals,
   upon a determination that any of the spreading codes assigned to said one of said other base stations is allocated to less than two user terminals, one of those codes is allocated to the user terminal.

7. A method according to claim 6, in which upon more than one code being determined as allocated to less than two user terminals, the one having the lowest associated attenuation to said one of said other base stations is allocated to the user terminal.

8. A method according to claim 6, in which upon determination that none of the spreading codes assigned to said one of said other base stations is allocated to less than two user terminals, a further one of said other base stations is selected for consideration.

9. A method according to claim 8, in which further base stations in the group are selected in turn for consideration according to their order in a list of decreasing measured attenuation to the first base station.

10. A method according to any preceding claim, in which each of the spreading codes assigned to the base stations in the group is already allocated to M user terminals, where M is an integer number of two or more, and the first base station dismisses as candidates for allocation those codes already in use by the first base station and dismisses as candidates for allocation those codes already allocated to more than M users;
    for each remaining candidate code, a sum is calculated of the linear path losses between the first base station and each of the other base stations in which that code is used in the group;
    the minimum value of the sums is identified, and the code corresponding to that minimum value is selected for allocation.

**11.** A method according to any preceding claim, in which a reuse order value is determined for the group of base stations at least two or more user terminals are allocated, the reuse order being the minimum number of user terminals that any of the spreading codes assigned to base stations in the group is currently allocated to.

**12.** A method according to claim 11, in which the code allocation scheme applied depends on the determined reuse order.

**13.** A method according to any preceding claim, in which, communications with user terminals that share the same assigned spreading code are scheduled by base stations within the group in different time windows.

**14.** A method according to any preceding claim, in which a code allocated to a user terminal for communications with one base station, from amongst codes assigned to another base station, is reallocated instead to another user terminal for communication with said one base station upon said another user terminal being determined as being closer to said one base station.

**15.** A cellular telecommunications network node comprising a spreading code allocator for allocating spreading codes for communications between a user terminal and the base station, the allocator being configured:

    to define a group of neighbouring base stations within which communications are synchronised and the same scrambling code is used, the group including the first base station, each base station in the group being assigned a respective set of spreading codes in which the spreading codes are different from the spreading codes assigned to other base stations in the group;
    to determine whether all the spreading codes in the set assigned to the first base station are currently allocated for use in communications between the first base station and other user terminals; and
    to, upon determining that all the spreading codes in the set assigned to the first base are currently allocated for use, select another base station in the group and determine whether all of the spreading codes in the set assigned to the second base station are currently allocated for use.

**Amended claims in accordance with Rule 137(2) EPC.**

    **1.** A method of allocating (8) a spreading code for communications between a user terminal (10) and a first cellular telecommunications base station (6), the method comprising:

    defining a group (4) ofneighbouring base stations within which communications are synchronised and the same scrambling code is used, the group including the first base station, each base station in the group being assigned a respective set of spreading codes in which the spreading codes are different from the spreading codes assigned to other base stations in the group;
    determining (Fig 7:b) whether all the spreading codes in the set assigned to the first base station are currently allocated for use in communications between the first base station and other user terminals;
    upon determining that all the spreading codes in the set assigned to the first base station are currently allocated for use, selecting another base station in the group and determining (Fig 7:c) whether all of the spreading codes in the set assigned to the second base station are currently allocated for use;
    in which a reuse order value is determined for the group of base stations at least two or more user terminals are allocated, the reuse order being the minimum number of user terminals that any of the spreading codes assigned to base stations in the group is currently allocated to; and
    in which the code allocation scheme applied depends on the determined reuse order.

    **2.** A method according to claim 1, in which upon determining (Fig 7:f) that not all the spreading codes in the set assigned to said another base station are currently allocated for use, allocating (Fig 7:c) for use in communications between the first base station and the user terminal one of the codes assigned to said another base station that is not currently allocated for use.

    **3.** A method according to clam 1, in which the base station having the highest measured signal attenuation to the first base station in the group is selected first as said another base station.

    **4.** A method according to claim 1 or claim 2, in which upon determining that all of the spreading codes in the set assigned to said another base station are currently allocated for use, a further base station in the group is selected and a determination made whether all of the spreading codes in a set assigned to the further base station are currently allocated for use.

**5.** A method according to any preceding claim, in which the first base station selects furttter base stations in the group in turn for consideration according to their order in a list of decreasing measured attenuation to the first base station.

**6.** A method according to any preceding claim, in which upon the first base station determining that none of the other base stations in the group has an unallocated code, one of said other base stations is selected (Fig 8:b') and a determination made (Fig 8:c') whether any of the spreading codes assigned to said one of said other base stations is allocated to less than two user terminals,
upon a determination that any of the spreading codes assigned to said one of said other base stations is allocated to less than two user terminals, one of those codes is allocated (Fig 8:g',h') to the user terminal.

**7.** A method according to claim 6, in which upon more than one code being determined as allocated to less than two user terminals, the one having the lowest associated attenuation to said one of said other base stations is allocated (Fig 8:g') to the user terminal.

**8.** A method according to claim 6, in which upon determination that none of the spreading codes assigned to said one of said other base stations is allocated to less than two user terminals, a further one of said other base stations is selected for consideration.

**9.** A method according to claim 8, in which further base stations in the group are selected in turn for consideration according to their order in a list of decreasing measured attenuation to the first base station.

**10.** A method according to any preceding claim, in which each of the spreading codes assigned to the base stations in the group is already allocated to M user terminals, where M is an integer number of two or more, and the first base station dismisses (Fig 10:c") as candidates for allocation those codes already in use by the first base station and dismisses (Fig 10:d") as candidates for allocation those codes already allocated to more than M users;
for each remaining candidate code, a sum is calculated (Fig 10:e") of the linear path losses between the first base station and each of the other base stations in which that code is used in the group;
the minimum value of the sums is identified, and the code corresponding to that minimum value is selected (Fig 10:f") for allocation.

**11.** A method according to any preceding claim, in which, communications with user terminals that share the same assigned spreading code are scheduled by base stations within the group in different time windows.

**12.** A method according to any preceding claim, in which a code allocated to a user terminal for communications with one base station, from amongst codes assigned to another base station, is reallocated instead to another user terminal for communication with said one base station upon said another user terminal being determined as being closer to said one base station.

**13.** A cellular telecommunications network node (6) comprising a spreading code allocator (8) for allocating spreading codes for communications between a user terminal (10) and the base station (6), the allocator being configured:

to define a group (4) of neighbouring base stations within which communications are synchronised and the same scrambling code is used, the group including the first base station, each base station in the group being assigned a respective set of spreading codes in which the spreading codes are different from the spreading codes assigned to other base stations in the group;
to determine (Fig 7:b) whether all the spreading codes in the set assigned to the first base station are currently allocated for use in communications between the first base station and other user terminals;
to, upon determining that all the spreading codes in the set assigned to the first base station are currently allocated for use, select another base station in the group and determine (Fig7:o) whether all of the apreading in the out assigned to the second base station are currently allocated for use;
in which a reuse order value is determined for the group of base stations at least two or more user terminals are allocated, the reuse order being the minimum number of user terminals that any of the spreading codes assigned to base stations in the group is currently allocated to; and
in which the code allocation scheme applied depends on the determined reuse order.

FIG. 1
(PRIOR ART)

FIG. 2
(PRIOR ART)

## FIG. 3

SPREADING
SMALL CELL CODE ALLOCATOR
BASE-STATION ⟍8
6 ⟍

6 ⟍

10

10

10

USER
TERMINAL
10 ⟍

10

10 ⟍

6

SHARE SAME SCRAMBLING
CODE FOR DATA AND
CONTROL CHANNELS

2 ⟋

4 ⟋

SMALL CELL CLUSTER

## FIG. 4

| CODE #1 |
| CODE #2 |
| ⋮ |

CELL 1 (HIGH LOAD)

CELL 2 (LOW LOAD)

CELL 3

⋮

## FIG. 5

NEW USER ARRIVES FOR CELL# 1

| CODE NO. | CODE STATUS | USED IN OTHER CELLS | PATH LOSS | |
|---|---|---|---|---|
| CODE #1 | ALLOC | ... | 65dB | ⎫ |
| CODE #2 | FREE | ... | 85dB | |
| CODE #3 | ALLOC | ... | 73dB | |
| CODE #4 | ALLOC | ... | 59dB | ⎬ CELL 1 |
| CODE #5 | ALLOC | ... | 61dB | |
| CODE #6 | ALLOC | ... | 66dB | ⎭ |
| CODE #7 | ALLOC | ... | 73dB | ⎫ |
| CODE #8 | FREE | ... | | ⎬ CELL 2 |
| CODE #9 | FREE | ... | | ⎭ |
| CODE #10 | ALLOC | ... | 71dB | ⎫ |
| CODE #11 | ALLOC | ... | 49dB | |
| CODE #12 | FREE | ... | | ⎬ CELL 3 |
| CODE #13 | FREE | ... | | ⎭ |

⋮　　(A)

NEW USER ARRIVES FOR CELL# 1

| CODE NO. | CODE STATUS | USED IN OTHER CELLS | PATH LOSS | |
|---|---|---|---|---|
| CODE #1 | ALLOC | ... | 65dB | ⎫ |
| CODE #2 | FREE | ... | 85dB | |
| CODE #3 | ALLOC | ... | 73dB | |
| CODE #4 | ALLOC | ... | 59dB | ⎬ CELL 1 |
| CODE #5 | ALLOC | ... | 61dB | |
| CODE #6 | ALLOC | ... | 66dB | ⎭ |
| CODE #8 | ALLOC | ... | 69dB | NEW USER |
| CODE #7 | ALLOC | ... | 73dB | ⎫ CELL 2 |
| CODE #9 | FREE | ... | | ⎭ |
| CODE #10 | ALLOC | ... | 71dB | ⎫ |
| CODE #11 | ALLOC | ... | 49dB | ⎬ CELL 3 |
| CODE #12 | FREE | ... | | |
| CODE #13 | FREE | ... | | ⎭ |

⋮　　(B)

## FIG. 6

BORROWING ORDER CELL 1: CELL 3, CELL 4, CELL 2
BORROWING ORDER CELL 2: CELL 1, CELL 4, CELL 3
BORROWING ORDER CELL 3: CELL 1, CELL 2, CELL 4
BORROWING ORDER CELL 4: CELL 1, CELL 2, CELL 3

CELL 2

65dB　53dB　60dB

CELL 1　110dB　CELL 3

72dB　44dB

CELL 4

*FIG. 7*

REUSE ORDER IS 0

*FIG. 8*

```
                                    ┌─────────────────┐ ⌡a′
                                    │ NEW USER ARRIVAL │
                                    └─────────┬───────┘
                                              │        ⌡b′
                                    ┌─────────┴───────┐
                                    │ CHECK THE FIRST CELL │
                                    │ IN THE BORROWING LIST │
                                    └─────────┬───────┘
                                              │
                     ⌡d′
```

NEW USER ARRIVAL

CHECK THE FIRST CELL IN THE BORROWING LIST

ANY CODE ALLOCATED TO LESS THAN 2 USERS AVAILABLE?  —NO→  CHECK THE NEXT CELL IN THE BORROWING LIST

ANY CODE ALLOCATED TO LESS THAN 2 USERS AVAILABLE?  NO

YES

YES

SELECT THE CODE WITH LOWEST PATH LOSS TO THE LENDING CELL

UPDATE CODE STATUS

a′  b′  c′  d′  e′  f′  g′  h′

REUSE ORDER IS 1

## FIG. 9

NEW USER ARRIVES FOR CELL# 1

| CODE NO. | CODE STATUS | USED IN WHICH OTHER CELLS? | PATH LOSS | |
|---|---|---|---|---|
| CODE #1 | ALLOC | --- | 65dB | CELL 1 |
| CODE #2 | ALLOC | --- | 85dB | |
| CODE #3 | ALLOC | --- | 73dB | |
| CODE #4 | ALLOC | --- | 59dB | |
| CODE #5 | ALLOC | --- | 61dB | |
| CODE #6 | ALLOC | --- | 66dB | |
| CODE #7 | ALLOC | 5 | 73dB | CELL 2 |
| CODE #8 | ALLOC | --- | 89dB | |
| CODE #9 | ALLOC | --- | 81dB | |
| CODE #10 | ALLOC | 6 | 71dB | CELL 3 |
| CODE #11 | ALLOC | 6 | 49dB | |
| CODE #12 | ALLOC | 4 | 62dB | |
| CODE #13 | ALLOC | 6 | 58dB | |

(A)

BORROWING ORDER CELL #1: CELL 3, CELL 2, ...

CELL# 1 CHECKS CELL# 3 BUT ALL CODES ARE ALREADY ALLOCATED TO TWO USERS

| CODE NO. | CODE STATUS | USED IN WHICH OTHER CELLS? | PATH LOSS | |
|---|---|---|---|---|
| CODE #1 | ALLOC | --- | 65dB | |
| CODE #2 | ALLOC | --- | 85dB | |
| CODE #3 | ALLOC | --- | 73dB | |
| CODE #4 | ALLOC | --- | 59dB | |
| CODE #5 | ALLOC | --- | 61dB | |
| CODE #6 | ALLOC | --- | 66dB | |
| CODE #7 | ALLOC | 5 | 73dB | |
| CODE #8 | ALLOC | --- | 89dB | |
| CODE #9 | ALLOC | --- | 81dB | |
| CODE #10 | ALLOC | ⑥ | 71dB | ALL CODES USED IN HOME (CELL 3) AND OTHER CELLS |
| CODE #11 | ALLOC | ⑥ | 49dB | |
| CODE #12 | ALLOC | ④ | 62dB | |
| CODE #13 | ALLOC | ⑥ | 58dB | |

(B)

CELL# 1 CHECKS CELL# 2 AND CHOOSES CODE# 9 FOR THE NEW USER

| CODE NO. | CODE STATUS | USED IN WHICH OTHER CELLS? | PATH LOSS |
|---|---|---|---|
| CODE #1 | ALLOC | --- | 65dB |
| CODE #2 | ALLOC | --- | 85dB |
| CODE #3 | ALLOC | --- | 73dB |
| CODE #4 | ALLOC | --- | 59dB |
| CODE #5 | ALLOC | --- | 61dB |
| CODE #6 | ALLOC | --- | 66dB |
| CODE #9 | ALLOC | 2 | 70dB |
| CODE #7 | ALLOC | 5 | 73dB |
| CODE #8 | ALLOC | --- | 89dB |
| CODE #9 | ALLOC | --- | 81dB |
| CODE #10 | ALLOC | 6 | 71dB |
| CODE #11 | ALLOC | 6 | 49dB |
| CODE #12 | ALLOC | 4 | 62dB |
| CODE #13 | ALLOC | 6 | 58dB |

COPY

(C)

CODE 7 IS ALREADY BEING USED IN OTHER CELLS. CODE# 9 IS PREFFERED TO CODE 8 FOR SMALLER PATH LOSS.

## FIG. 10

```
                                            ⌐a″
┌──────────────────────────┐
│ A NEW USER ARRIVES AT    │
│ CELL# N & THE CLUSTER    │
│ REUSE ORDER IS M         │
└──────────────────────────┘
              │                 ⌐b″
┌──────────────────────────┐
│ CHECK TO SEE IN WHICH    │
│ CELLS EACH CODE IS       │
│ BEING USED               │
└──────────────────────────┘
              │                 ⌐c″
┌──────────────────────────┐
│ DISMISS ANY CODE THAT    │
│ IS ALREADY BEING ISED    │
│ IN CELL# N               │
└──────────────────────────┘
              │                 ⌐d″
┌──────────────────────────┐
│ DISMISS ANY CODE THAT    │
│ IS ALREADY ALLOCATED     │
│ TO MORE THAN M USERS     │
└──────────────────────────┘
              │                     ⌐e″
┌──────────────────────────────────┐
│ FOR EACH OF THE REMAINING CODES, │
│ CALCULATE THE SUM OF PATH LOSSES │
│ FROM CELL# N AND THE CELLS IN    │
│ WHICH THE SAID CODE IS BEING USED│
│ DENOTE THIS QUANTITY AS F        │
└──────────────────────────────────┘
              │                 ⌐f″
┌──────────────────────────┐
│ CHOOSE THE CODE THAT     │
│ CORRESPOND TO THE        │
│ MINIMUM F VALUE          │
└──────────────────────────┘
              │                 ⌐g″
┌──────────────────────────┐
│ UPDATE CODE STATUS       │
└──────────────────────────┘
```

REUSE ORDER IS 2 OR MORE

*FIG. 11*

NEW USER ARRIVES FOR CELL# 1

| CODE NO. | CODE STATUS | USED IN WHICH OTHER CELLS? | PATH LOSS | |
|---|---|---|---|---|
| CODE #1 | ALLOC | 2 | 65dB | ⎫ |
| CODE #2 | ALLOC | 2 | 85dB | |
| CODE #3 | ALLOC | 3 | 73dB | |
| CODE #5 | ALLOC | 2 | 62dB | ⎬ CELL 1 |
| CODE #8 | ALLOC | 3 | 55dB | |
| CODE #10 | ALLOC | 4 | 49dB | |
| CODE #11 | ALLOC | 4 | 80dB | ⎭ |
| CODE #1 | ALLOC | 1 | 59dB | ⎫ |
| CODE #2 | ALLOC | 1 | 61dB | |
| CODE #4 | ALLOC | 3,4 | 66dB | |
| CODE #5 | ALLOC | 1 | 70dB | ⎬ CELL 2 |
| CODE #6 | ALLOC | 4 | 73dB | |
| CODE #7 | ALLOC | 3 | 84dB | |
| CODE #12 | ALLOC | 3,4 | 65dB | ⎭ |
| CODE #3 | ALLOC | 1 | 57dB | ⎫ |
| CODE #4 | ALLOC | 2 | 62dB | |
| CODE #7 | ALLOC | 2 | 75dB | ⎬ CELL 3 |
| CODE #8 | ALLOC | 1 | 48dB | |
| CODE #9 | ALLOC | 4 | 59dB | |
| CODE #12 | ALLOC | 4.2 | 44dB | ⎭ |
| CODE #6 | ALLOC | 2 | 53dB | ⎫ |
| CODE #9 | ALLOC | 3 | 81dB | |
| CODE #10 | ALLOC | 1 | 54dB | ⎬ CELL 4 |
| CODE #11 | ALLOC | 1 | 62dB | |
| CODE #12 | ALLOC | 2.3 | 72dB | ⎭ |

$V=[\{1,2\}$    $F=[\inf$
$\{1,2\}$      $\inf$ ⎱ ⟶ | Contain Cell #1 |
$\{1,3\}$      $\inf$ ⎰
$\{2,3,4\}$    $\inf$ ⟶ | More than 2 cells |
$\{1,2\}$      $\inf$ ⟶ | Contain Cell #1 |
$\{2,4\}$      3.792e-07
$\{2,3\}$      3.162e-07
$\{1,3\}$      $\inf$ ⟶ | Contain Cell #1 |
$\{4,3\}$      6.309e-08
$\{1,4\}$      $\inf$ ⎱ ⟶ | Contain Cell #1 |
$\{1,4\}$      $\inf$ ⎰
$\{2,3,4\}]$   $\inf$ ⟶ | More than 2 cells |

└─ BEST CODE (CODE #9)

Europäisches
Patentamt

European
Patent Office

Office européen
des brevets

## EUROPEAN SEARCH REPORT

Application Number

EP 12 29 0415

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 451 104 A1 (ALCATEL LUCENT [FR]) 9 May 2012 (2012-05-09) * paragraph [0005] - paragraph [0027] * * paragraph [0071] - paragraph [0082]; claims 1-3 * ----- | 1-15 | INV. H04W72/04 |
| Y | EP 1 773 085 A1 (SAMSUNG ELECTRONICS CO LTD [KR]) 11 April 2007 (2007-04-11) * abstract * * paragraph [0033] - paragraph [0052] * ----- | 1-15 | |
| A | US 2010/009695 A1 (KWON TAE SOO [KR] ET AL) 14 January 2010 (2010-01-14) * abstract * * paragraph [0035] - paragraph [0096] * ----- | 1-15 | |
| A | WO 00/24146 A1 (ERICSSON TELEFON AB L M [SE]) 27 April 2000 (2000-04-27) * the whole document * ----- | 1-15 | |
| A | US 2002/176438 A1 (KARJALAINEN MIIA [FI]) 28 November 2002 (2002-11-28) * the whole document * ----- | 1-15 | TECHNICAL FIELDS SEARCHED (IPC) H04W |
| A | WO 99/12284 A1 (ERICSSON TELEFON AB L M [SE]) 11 March 1999 (1999-03-11) * the whole document * ----- | 1-15 | |

The present search report has been drawn up for all claims

| Place of search | Date of completion of the search | Examiner |
|---|---|---|
| Munich | 4 March 2013 | Jaskolski, Jaroslaw |

EPO FORM 1503 03.82 (P04C01)

**ANNEX TO THE EUROPEAN SEARCH REPORT**
**ON EUROPEAN PATENT APPLICATION NO.**

EP 12 29 0415

04-03-2013

| Patent document cited in search report | | Publication date | Patent family member(s) | | Publication date |
|---|---|---|---|---|---|
| EP 2451104 | A1 | 09-05-2012 | EP | 2451104 A1 | 09-05-2012 |
| | | | WO | 2012059214 A2 | 10-05-2012 |
| EP 1773085 | A1 | 11-04-2007 | AU | 2006300125 A1 | 19-04-2007 |
| | | | CA | 2621661 A1 | 19-04-2007 |
| | | | CN | 101283561 A | 08-10-2008 |
| | | | EP | 1773085 A1 | 11-04-2007 |
| | | | JP | 4819125 B2 | 24-11-2011 |
| | | | JP | 2009510967 A | 12-03-2009 |
| | | | KR | 20080064122 A | 08-07-2008 |
| | | | RU | 2366089 C1 | 27-08-2009 |
| | | | US | 2007081449 A1 | 12-04-2007 |
| | | | WO | 2007043782 A1 | 19-04-2007 |
| US 2010009695 | A1 | 14-01-2010 | KR | 20100005955 A | 18-01-2010 |
| | | | US | 2010009695 A1 | 14-01-2010 |
| WO 0024146 | A1 | 27-04-2000 | AU | 1427000 A | 08-05-2000 |
| | | | CA | 2347366 A1 | 27-04-2000 |
| | | | EP | 1123594 A1 | 16-08-2001 |
| | | | JP | 4296713 B2 | 15-07-2009 |
| | | | JP | 2002528954 A | 03-09-2002 |
| | | | US | 6163524 A | 19-12-2000 |
| | | | WO | 0024146 A1 | 27-04-2000 |
| US 2002176438 | A1 | 28-11-2002 | NONE | | |
| WO 9912284 | A1 | 11-03-1999 | AR | 017048 A1 | 22-08-2001 |
| | | | AU | 751483 B2 | 15-08-2002 |
| | | | AU | 9012798 A | 22-03-1999 |
| | | | BR | 9811428 A | 22-08-2000 |
| | | | CA | 2299297 A1 | 11-03-1999 |
| | | | CN | 1269927 A | 11-10-2000 |
| | | | EP | 1010266 A1 | 21-06-2000 |
| | | | FI | 20000460 A | 29-02-2000 |
| | | | JP | 2001515302 A | 18-09-2001 |
| | | | SE | 9703161 A | 03-03-1999 |
| | | | TW | 393843 B | 11-06-2000 |
| | | | WO | 9912284 A1 | 11-03-1999 |
| | | | ZA | 9806672 A | 01-04-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ABBAS ANTOUN HATOUM ; NADIJB AITSAADI ; RAMI LANAR ; RAOUF BOUTABA ; GUY PUJO-LLE.** FCRA: Femtocell Cluster-Based Resource Allocation Scheme for OFDMA Networks. *FCRA: Femtocell Cluster-Based Resource Allocation Scheme for OFDMA Networks,* 2011